# EUROPÄISCHE PATENTANMELDUNG

(11) **EP 1 346 873 A1**
(43) Veröffentlichungstag der Anmeldung: **24.09.2003**
(21) Anmeldenummer: 03005916.6
(22) Anmeldetag: 17.03.2003
(51) Int. Cl.: B60P 3/00

(54) **Transportfahrzeug für Flachglasladungen**

(30) Priorität: 18.03.2002 DE 20204181 U
(71) Anmelder: Schreiner Transporte GmbH, 95239 Zell (DE)
(72) Erfinder: Schreiner, Reinhard, 95239 Zell (DE)
(74) Vertreter: Hübner, Gerd, Dipl.-Phys.

(57) **Zusammenfassung**

Bei einem Transportfahrzeug für Flachglasladungen mit einem Laderaum (9) zur Platzierung der Flachglasladung (4) im wesentlichen hochkant in Fahrtrichtung (F) des Fahrzeuges (1), und einer seitlich am Laderaum (9) angeordneten Ladungssicherungseinrichtung (10, 11) zur Fixierung der Flachglasladung (4), welche Ladungssicherungseinrichtung (10, 11) mehrere die Flachglasladung (4) beaufschlagende Sicherungsplatten (12, 13, 12', 13'), und Zustelleinrichtungen (14, 15, 14', 15') zum Verfahren der Sicherungsplatten (12, 13, 12', 13') zwischen einer Freigabestellung und einer Fixierstellung bezüglich der Flachglasladung (4) aufweist, ist vorgesehen, dass die Ladungssicherungseinheit eines Glastransportfahrzeuges so verbessert wird, dass ein schonender und möglichst bruchfreier Transport auch von sehr empfindlichen Glasscheiben möglich wird.

## Beschreibung

Die Erfindung betrifft ein Transportfahrzeug für Flachglasladungen mit den im Oberbegriff des Anspruches 1 angegebenen Merkmalen.

Derartige Transportfahrzeuge, wie sie üblicher Weise als "Innenlader" bezeichnet werden, sind aus einer Vielzahl von Druckschriften aus dem Stand der Technik bekannt. Lediglich beispielhaft wird auf die DE 88 14 024 U1 verwiesen. Diese Druckschrift offenbart ein Transportfahrzeug mit einem Laderaum, in dem auf einem im Querschnitt A-förmigen Glasbock zwei Flachglasladungen aus einzelnen Glasscheibenpaketen im Wesentlichen hochkant in Fahrtrichtung des Fahrzeuges platziert sind. Beiderseits des Laderaums ist jeweils eine Ladungssicherungseinrichtung zur Fixierung der Flachglasladung im Laderaum vorgesehen, die mehrere, die Flachglasladung beaufschlagende Sicherungsplatten aufweist. Letztere werden durch Zustelleinrichtungen vorzugsweise in Form von hydraulisch angetriebenen Lenkeranordnungen zwischen einer Freigabestellung und einer Fixierstellung für die Ladung verfahren.

Problematisch beim Stand der Technik ist die Tatsache, dass die Sicherungsplatten aus relativ kleinflächigen, sich vornehmlich in vertikaler Richtung erstreckenden Pressbalken bestehen, deren Auflageflächen auf der Glasladung etwa 0,5 m² bis 0,6 m² beträgt. Die Glasscheiben werden also im Wesentlichen punktuell beaufschlagt, was dort zu Belastungsspitzen führen kann. Insbesondere bei sehr dünnen Glasscheiben, deren Dicke beispielsweise für die Herstellung von Verbundglas-Frontscheiben von Kraftfahrzeugen bis hinunter zu 2 mm betragen kann, besteht damit eine hohe Bruchgefahr.

Davon ausgehend liegt der Erfindung die Aufgabe zu Grunde, die Ladungssicherungseinheit eines Glastransportfahrzeuges so zu verbessern, dass ein schonender und möglichst bruchfreier Transport auch von sehr empfindlichen Glasscheiben möglich wird.

Diese Aufgabe wird durch die im Kennzeichnungsteil des Anspruches 1 angegebenen Merkmale grundsätzlich gelöst. Demnach sind auf jeder der beiden Seiten der Flachglasladung mindestens zwei großflächige, sich in Fahrtrichtung erstreckende Sicherungsplatten vorgesehen, die mit jeweils mindestens zwei Zustelleinrichtungen an die Ladung heran verfahrbar sind. Bevorzugter Maßen sind die Sicherungsplatten bezogen auf die Fahrtrichtung mindestens quadratisch bis langgestreckt - also in ihren Proportionen dem Stand der Technik genau entgegengesetzt - dimensioniert. Als "großflächig" kann dabei eine Beaufschlagungsfläche von mindestens drei Quadratmeter bis vorzugsweise fünf Quadratmeter pro Sicherungsplatte bezeichnet werden.

Durch die vorstehend erörterte Proportionierung und Dimensionierung der Sicherungsplatten ist eine großflächige Druckverteilung auf die Glasscheiben erreichbar, was eine extrem schonende Fixierung bewirkt.

Diese kann noch dadurch verbessert werden, dass die Sicherungsplatten jeweils kardanisch an den Zustelleinrichtungen angelenkt sind. Damit können geringfügige Wegdifferenzen beim Heranfahren der Sicherungsplatten zwischen den einzelnen Zustelleinrichtungen ausgeglichen und eine ungleichmäßige Belastung der Glasladung vermieden werden. Auch stellen sich die Sicherungsplatten dadurch zwanglos an unterschiedliche Neigungswinkel der Glasladung flexibel an.

Bevorzugter Maßen werden die Zustelleinrichtungen jeweils durch Lenkerkinematiken mit einem Festlenker und einem Hydraulikzylinder als Stelllenker realisiert, wobei die Hydraulikzylinder elektronisch gesteuert sind, um eine möglichst genaue Druckbeaufschlagung zu erreichen.

Weitere Merkmale, Einzelheiten und Vorteile der Erfindung sind der nachfolgenden Beschreibung entnehmbar, in der ein Ausführungsbeispiel an Hand der beigefügten Zeichnungen näher erläutert wird. Es zeigen:
- Fig. 1: eine Ansicht eines Glastransportfahrzeuges mit fixierter Ladung von hinten bei geöffnetem Laderaum,
- Fig. 2: eine schematische Draufsicht auf das Transportfahrzeug gemäß Fig. 1,
- Fig. 3: eine vergrößerte Ansicht einer Zustelleinrichtung für die Sicherungsplatte,
- Fig. 4: eine Frontansicht einer Sicherungsplatte gemäß Fig. 1,
- Fig. 5: eine Ansicht eines Transportfahrzeuges analog Fig. 1 mit einer Ladungssicherungseinrichtung in einer zweiten Ausführungsform,
- Fig. 6: eine schematische Draufsicht auf das Transportfahrzeug gemäß Fig. 5, und
- Fig. 7: eine Frontansicht einer Sicherungsplatte gemäß Fig. 4

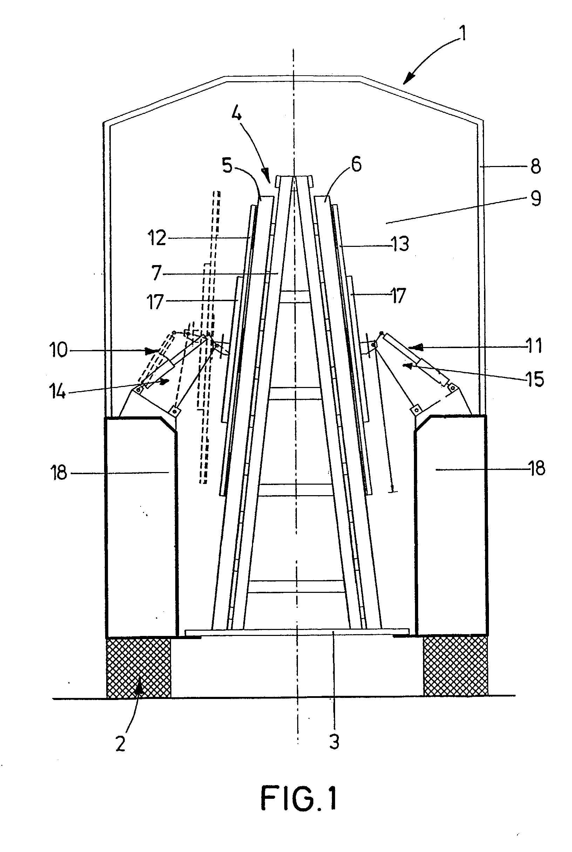

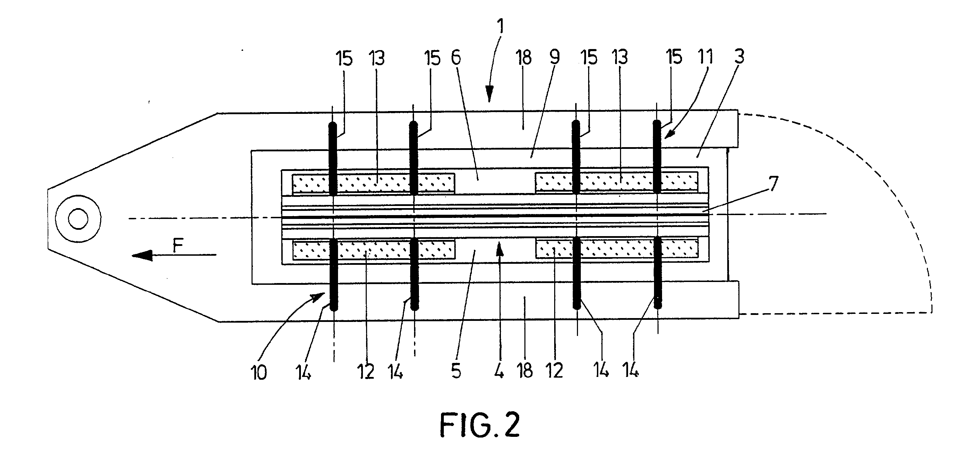

Die Fig. 1 und 2 zeigen einen sogenannten Innenlader 1 in Form eines Sattelaufliegers als Transportfahrzeug für Flachglasladungen. Er weist ein absenk- und anhebbares Fahrgestell 2 auf, mit dem der Innenlader 1 einen Transportboden 3 unterfahren und die als Ganzes mit 4 bezeichnete Flachglasladung aufnehmen kann.

Letztere besteht aus zwei Paketen 5, 6 von Glasscheiben, die im Wesentlichen hochkant unter einem steilen Winkel an einem im Querschnitt A-förmigen Glasbock 7 gelehnt sind. Zur Sicherung der Ladung 4 in dem von einem Kastenaufbau 8 umgrenzten Laderaum 9 ist jeweils seitlich der Ladung 4 eine Ladungssicherungseinrichtung 10, 11 vorgesehen. Diese Ladungssicherungseinrichtung 10, 11 besteht jeweils aus zwei in Fahrtrichtung F hintereinander angeordneten, im Wesentlichen vertikal stehenden Sicherungsplatten 12, 13, die jeweils an zwei Zustelleinrichtungen 14, 15 - wie im Folgenden noch näher erläutert wird - kardanisch angelenkt sind.

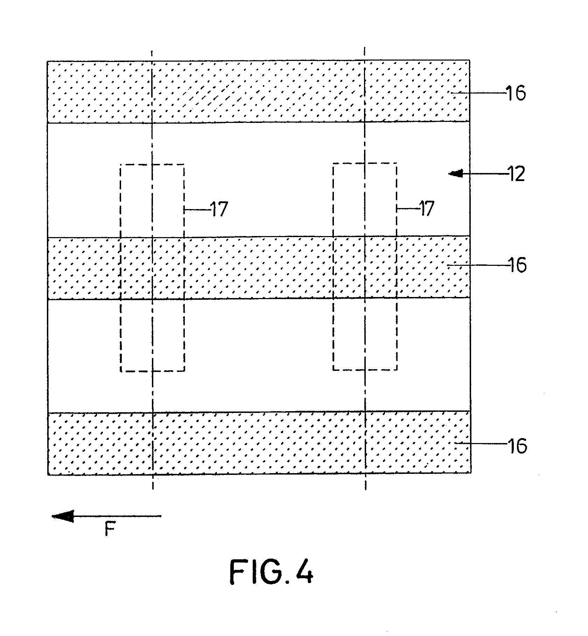

Wie aus Fig. 4 deutlich wird, bestehen die Sicherungsplatten 12, 13 aus einer quadratischen Metallplatte einer Fläche von vier Quadratmetern, die am oberen und unteren Rand sowie mittig mit horizontal, parallel zur Fahrtrichtung F verlaufenden Moosgummistreifen 16 auf ihrer der Ladung 4 zugewandten Seite belegt sind. Rückwärtig sind die Sicherungsplatten 12, 13 mit U-förmigen Profilen 17 in den Bereichen verstärkt, wo die Zustelleinrichtungen 14, 15 angreifen.

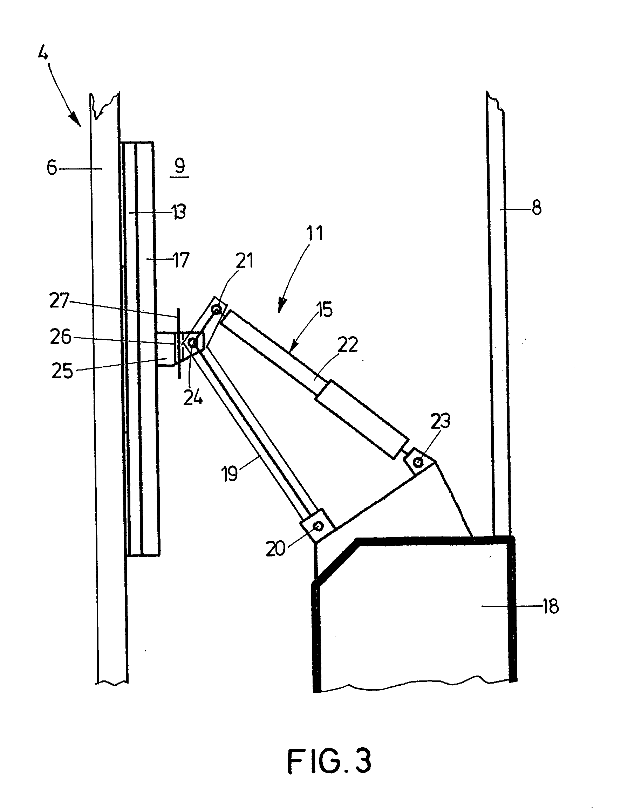

An Hand von Fig. 3 können die Zustelleinrichtungen am Beispiel einer in Fahrtrichtung rechts gelegenen Zustelleinrichtung 15 näher erläutert werden. So sind die Zustelleinrichtungen 14, 15 grundsätzlich an einem seitlich am Laderaum 9 in Fahrtrichtung F verlaufenden Träger 18 befestigt. Jede Zustelleinrichtung 14, 15 ist als Lenkerkinematik ausgebildet, die aus zwei Lenkern besteht, nämlich einem inneren Basislenker 19, der an einem ersten Gelenk 20 am Träger 18 angelenkt ist. Der Basislenker 19 ist in seinem oberen Endbereich von der Sicherungsplatte 12, 13 weg weisend abgekröpft und weist an seinem freien Ende ein Gelenk 21 auf, an dem ein Stelllenker 22 angelenkt ist. Dieser besteht aus einem elektronisch gesteuerten Hydraulikzylinder, der am unteren Ende in einem außen am Träger 18 liegenden Gelenk 23 befestigt ist.

Im Bereich der Abkröpfung des Basislenkers 19 ist ein weiteres, wie die Gelenke 20, 21 und 23 ebenfalls mit seiner Schwenkachse parallel zur Fahrtrichtung F verlaufendes Gelenk 24 vorgesehen, in dem eine Plattenstrebe 25 schwenkbar gelagert ist. Diese Plattenstrebe 25 steht im Wesentlichen quer zur Fahrtrichtung F, weist von der Zustelleinrichtung 14 nach innen und trägt an ihrem freien Ende die jeweilige Sicherungsplatte 12, 13. In der Plattenstrebe 15 ist ein weiteres, scharnierartiges Gelenk 26 vorgesehen, dessen Schwenkachse 27 vertikal verläuft. Die Gelenke 24 und 26 bilden dadurch Kreuzgelenke, sodass die Sicherungsplatte 12 kardanisch an der Zustelleinrichtung 14 aufgehängt ist.

Wie aus Fig. 1 und 2 deutlich wird, kann ausgehend von der in Fig. 1 in Fahrtrichtung links strichliert gezeigten Freigabestellung für die Ladung die Ladungssicherungseinrichtung 10 durch Ausfahren der Stelllenker 22 nach innen verschwenkt werden. Die Sicherungsplatten 12, 13 sind dabei im Wesentlichen in ihrem Schwerpunkt an den Haltestreben 25 aufgehängt, sodass sich diese relativ leichtgängig um eine horizontale, parallel zur Fahrtrichtung F verlaufende Achse verschwenken lassen. Die Sicherungsplatten 12, 13 können damit an beliebiger Stelle an der Flachglasladung 4 in Kontakt gelangen und drehen sich anschließend beim weiteren Einschwenken in eine saubere Anlageposition mit großflächigen Kontakt, wie sie in Fig. 1 mit durchgezogenen Linien dargestellt ist. Diese Fixierstellung wird durch eine den Praxisanforderungen entsprechende Druckbeaufschlagung der die Stelllenker 22 bildenden Hydraulikzylinder aufrecht erhalten, die einerseits die notwendige Fixierkraft aufbringt, um die Glasladung 4 sauber zu halten, andererseits jedoch nicht zu hoch ist, um die einzelnen Scheiben der Ladung 4 nicht zu stark zusammenzupressen. Dann nämlich würden die Scheiben beim Abnehmen durch Adhäsion stark aneinander haften und könnten nur schwer einzeln mit Saughebevorrichtungen abgenommen werden.

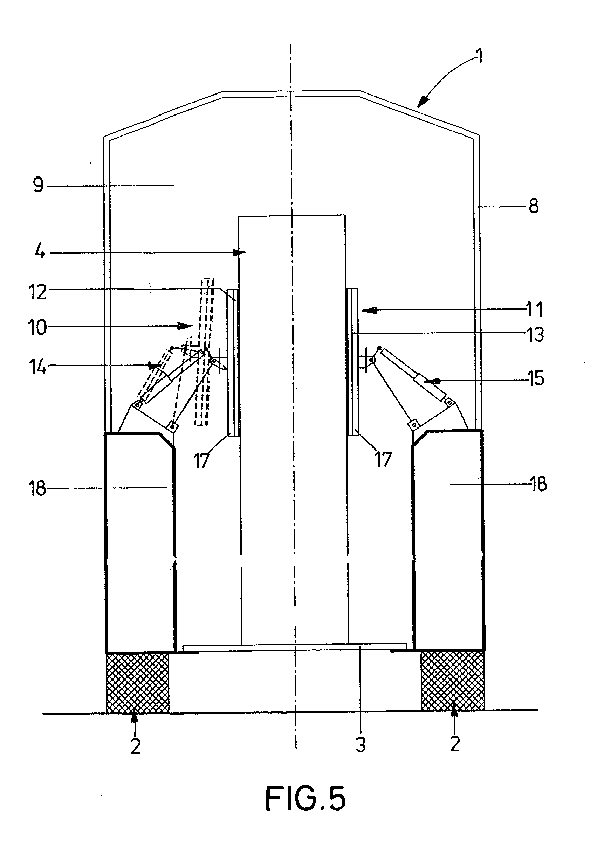

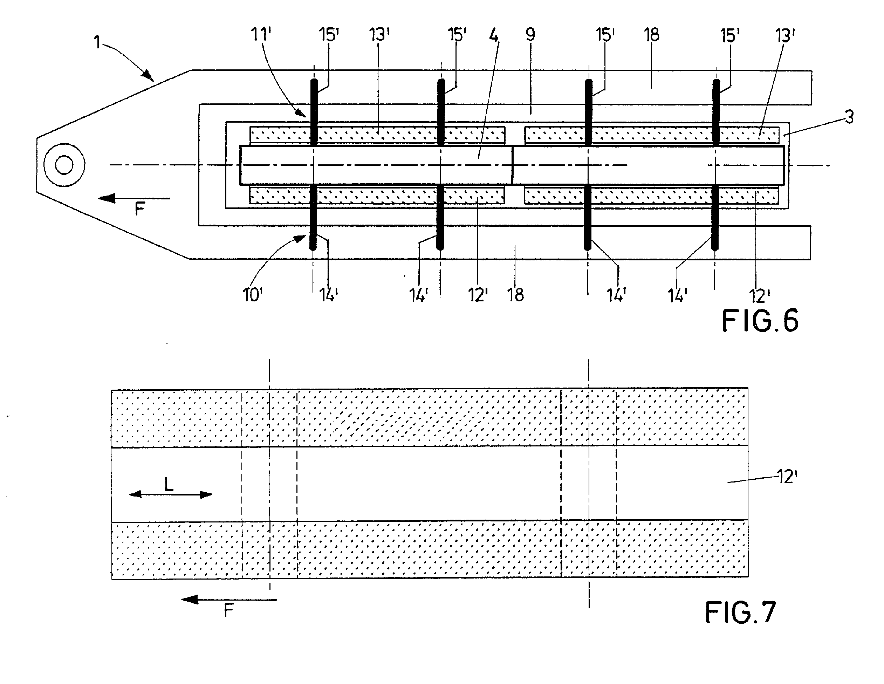

Die in den Fig. 5 bis 7 dargestellte Variante eines Innenladers 1 weist Ladungssicherungseinrichtungen 10', 11' auf, die sich von denen des vorherigen Ausführungsbeispiels lediglich in der Dimensionierung und Proportionierung der Sicherungsplatten 12', 13' unterscheiden. Letztere sind nämlich als langgestreckt rechteckige Metallplatten ausgeführt, deren Längsrichtung L parallel zur Fahrtrichtung F verläuft. Die Fläche dieser Sicherungsplatten 12', 13' beträgt ca. 3,5 m², das Längen-/Breitenverhältnis liegt bei etwa 3,5 : 1. Da die Sicherungsplatten 12', 13' schmäler ausgebildet sind, sind lediglich zwei Moosgummistreifen 16' vorgesehen.

Die Zustelleinrichtungen 14', 15' entsprechen der Bauweise, wie sie an Hand der Fig. 1 bis 4 erläutert wird, sodass sich weitere Ausführungen hierzu erübrigen.

## Patentansprüche

1. Transportfahrzeug für Flachglasladungen mit
- einem Laderaum (9) zur Platzierung der Flachglasladung (4) im wesentlichen hochkant in Fahrtrichtung (F) des Fahrzeuges (1), und
- einer seitlich am Laderaum (9) angeordneten Ladungssicherungseinrichtung (10, 11) zur Fixierung der Flachglasladung (4), welche Ladungssicherungseinrichtung (10, 11) aufweist
= mehrere die Flachglasladung (4) beaufschlagende Sicherungsplatten (12, 13, 12', 13'), und
= Zustelleinrichtungen (14, 15, 14', 15') zum Verfahren der Sicherungsplatten (12, 13, 12', 13') zwischen einer Freigabestellung und einer Fixierstellung bezüglich der Flachglasladung (4),
**dadurch gekennzeichnet, dass**
- mindestens zwei großflächige, sich in Fahrtrichtung (F) erstreckende Sicherungsplatten (12, 13, 12', 13') auf jeder der beiden Seiten der Flachglasladung (4) vorgesehen sind, die mit jeweils mindestens zwei Zustelleinrichtungen (14, 15, 14',15') versehen sind.

2. Transportfahrzeug nach Anspruch 1, **dadurch gekennzeichnet, dass** die Sicherungsplatten (12, 13, 12', 13') jeweils kardanisch an den Zustelleinrichtungen (14, 15, 14', 15') angelenkt sind.

3. Transportfahrzeug nach Anspruch 1 oder 2, **dadurch gekennzeichnet, dass** die Sicherungsplatten (12, 13, 12', 13') mindestens quadratisch bis bezogen auf die Fahrtrichtung (F) langgestreckt dimensioniert sind.

4. Transportfahrzeug nach einem der vorgenannten Ansprüche, **dadurch gekennzeichnet, dass** die Sicherungsplatten (12, 13, 12', 13') eine Fläche von jeweils mindestens 3 m² bis vorzugsweise 5 m² aufweisen.

5. Transportfahrzeug nach einem der vorgenannten Ansprüche, **dadurch gekennzeichnet, dass** die Zustelleinrichtungen (14, 15, 14', 15') jeweils durch Lenkerkinematiken mit einem Basislenker (19) und einem als Hydraulikzylinder ausgelegten Stelllenker (22) gebildet sind.

6. Transportfahrzeug nach Anspruch 5, **dadurch gekennzeichnet, dass** die Hydraulikzylinder elektronisch gesteuert sind.
